# EUROPEAN PATENT SPECIFICATION

(11) **EP 0 544 633 B1**
(45) Date of publication and mention of the grant of the patent: **14.02.1996**
(21) Application number: 92830641.4
(22) Date of filing: 25.11.1992
(51) Int. Cl.: F16F 7/08, D06F 37/20

(54) **A damper, in particular as utilized in washing machines**
Dämpfer, insbesondere für Waschmaschinen
Amortisseur, en particulier pour machines à laver

(30) Priority: 27.11.1991 IT BO910441
(43) Date of publication of application: 02.06.1993
(73) Proprietor: SEBAC ITALIA S.r.l., 56025 Pontedera (Pisa) (IT)
(72) Inventor: Piazzi, Paolo, I-40067 Rastignano, (Bologna) (IT)
(74) Representative: Lanzoni, Luciano

(56) References cited:
- EP-A- 0 301 190
- EP-A- 0 407 755
- US-A- 3 796 288
- PATENT ABSTRACTS OF JAPAN vol. 9, no. 187 (M-401)(1910) 3 August 1985 & JP-60 53 235 (SHIYOUWA SEISAKUSHO K.K.) 26 March 1985

## Description

The present invention relates to a damper, in particular as utilized in washing machines. Conventionally, the drum of a washing machine, i.e. the substantially cylindrical and rotatable pierced container into which soiled clothes and linen are placed for laundering, is supported by telescopic dampers (more exactly, the drum and wash tank are suspended as a complete assembly, though reference is made simply to a "drum" throughout the present specification, in the interests of brevity). Such dampers are able to fulfil a need which arises in particular at the initial stage of the high speed "spin" part of the washing cycle, namely, to absorb vibrations that would otherwise be transmitted with notable intensity to the drum, hence to the entire machine, by reason of the masses which are set in motion during this transient state.

The dampers fitted to washing machines currently in production consist essentially in a cylinder, and a piston capable of axial movement internally of the cylinder. The cylinder and the piston each present a free end for connection respectively to the drum and to the frame of the washing machine.

So-called friction dampers of the type in question, for example as disclosed in IT 1 133 258, comprise an annular friction element interposed between the cylinder and the piston, of which the purpose is to absorb oscillations and vibrations which the drum would otherwise be forced to describe in relation to the washing machine, especially during certain stages of the machine's operation. The use of this type of suspension is recommended principally by the fact that the damping action can be maintained steady over time in proportion with the amount of energy to be dissipated.

The annular friction element is restrained axially in relation to the piston between two profiles or stops afforded by the piston itself; these project radially from a portion of the peripheral surface that remains permanently within the compass of the cylinder, such that with the drum set in rotation, the annular friction element is invested constantly with axial movement as one with the piston, sliding repeatedly against a corresponding portion of the internal surface of the cylinder.

It has been observed that this persistent sliding action, generated with the damper absorbing energy at an appreciably high rate, is eminently desirable during the initial stages of the high speed spin part of the wash cycle (in effects during vigorous transient motion), though by no means advantageous once the initial stage of the spin is over. It will be common knowldge in fact that the initial stage of the spin in a machine wash cycle is typified by an energetic bouncing motion, with the drum turning noticeably off balance, whereas the remaining part of the spin is much smoother, as the drum rotates on its axis generating only marginal vibrations, These lesser vibrations would be better controlled if the dampers in question were able to effect a reduced damping action during smoother and steadier rotation of the drum. In short, a preferred damper would be one of which the energy absorbing action can be varied to suit the stroke.

Such kind of damper, for example, is disclosed in EP-A-0407755 (Miele & Cie.). In this case the damper provides an elastic response when the movements are small and a high level of damping effect when the movements of the damper are wider these features are obtained adding a series of spring elements to the friction element, with a relative increase of the complexity of the construction.

Accordingly, the object of the present invention is to provide a damper of the type described such as will absorb vibrations generated through the drum of a washing machine to optimum effect, that is, proportionately to the demands of the moment in any given operating condition of the machine.

An addition object of the present invention is to provide a telescopic damper of particularly simple and economical embodiment.

The aforementioned objects are realized in a damper according to the present invention, which may be of the type as utilized in particular in washing machines, comprising a cylinder, and a relative piston of which a lateral peripheral portion affords at least two annular projections establishing a seating to accommodate at least one annular friction element offered in direct contact to the inside wall of the cylinder, and is characterized in that the axial dimension of the seating compassed by the annular projections is greater than the axial dimension of the annular friction element.

The invention will now be described in detail, by way of example, with the aid of the accompanying drawings, in which:
- fig 1 is the schematic side elevation of a damper according to the present invention, seen partly in section and connected to two components of a user appliance;
- fig 2 is a graph illustrating the variations over time, during operation of a damper as in fig 1, of the reaction force "F", a characteristic operating parameter of the damper;
- figs 3, 4 and 5 are enlargements of a detail of fig 1, viewed in section and with certain parts omitted better to reveal others, illustrating an annular area of the damper and a friction element, accommodated by the annular area, during different stages of the damping action;
- figs 6 and 7 show two alternative embodiments of a damper according to the invention, enlarged and in section, and with certain parts omitted better to reveal others.

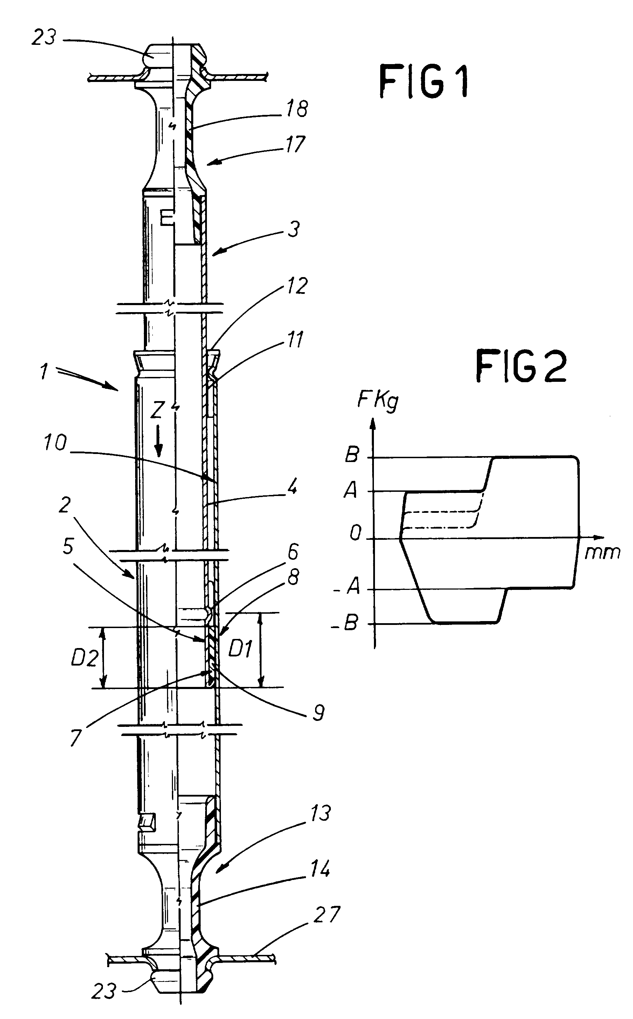

In fig 1 of the drawings, 1 denotes a telescopic damper, in its entirety, of which the components directly engaged in absorbing kinetic energy are a cylinder 2, and a relative piston 3 consisting in a rod 4 of section matched approximately to that of the cylinder 2, of which the piston end 5 exhibits a pair of annular projections 6 and 7 designed to afford a stable seating 8 for an annular element 9 functioning as a means of frictional contact with the inside wall 10 of the cylinder 2.

With the damper in operation, the two annular projections 6 and 7 remain spaced apart one from the other by a distance greater than the axial dimension of the annular friction element 9, such that the friction element 9 is capable of axial movement within the compass of the seating 8. 11 denotes a capping element associated with the cylinder 2, which is matched in shape to the rod 4 and affords a plurality of notches (one only of which, denoted 12, is illustrated in fig 1) such that when inserted into the marginally splayed end of the cylinder 2, a crimping force applied to the cylinder 2 over the notches 12 will ensure that the capping element 11 is held in a stable position. This same element also serves as a stop limiting the stroke of the rod 4.

The free ends of the cylinder 2 and the piston 3, denoted 13 and 17 respectively, are associated with relative shanks 14 and 18 (fashioned from flexible material in the example illustrated) of which the extremities afford anchor means 23 in the form of projections such as will snap into corresponding holes offered by the walls 27 of the two parts from which it is wished to absorb oscillations, (in the case of a washing machine, the drum and the frame). These components are not central to the present invention and therefore not described further. It will be seen that, by proportioning the annular seating 8 created between the annular projections 6 and 7 with an axial dimension D1 greater than the corresponding axial dimension D2 of the annular friction element 9, it becomes possible, as visible also from the graph of fig 2, to optimize the force opposing the axial movement of the piston 3 inside the cylinder 2 at any given moment during operation of the washing machine, i.e. during rotation of the drum, as friction is generated between the annular element 9 and the respective internal and external surfaces of the cylinder 2 and the piston 3.

In other words, a variable response can be achieved in the dissipation of kinetic energy, according to the difference dφ between the external diameter φe of the piston 3 and the internal diameter φi of the cylinder 2 and to the relative axial travel between these same two components.

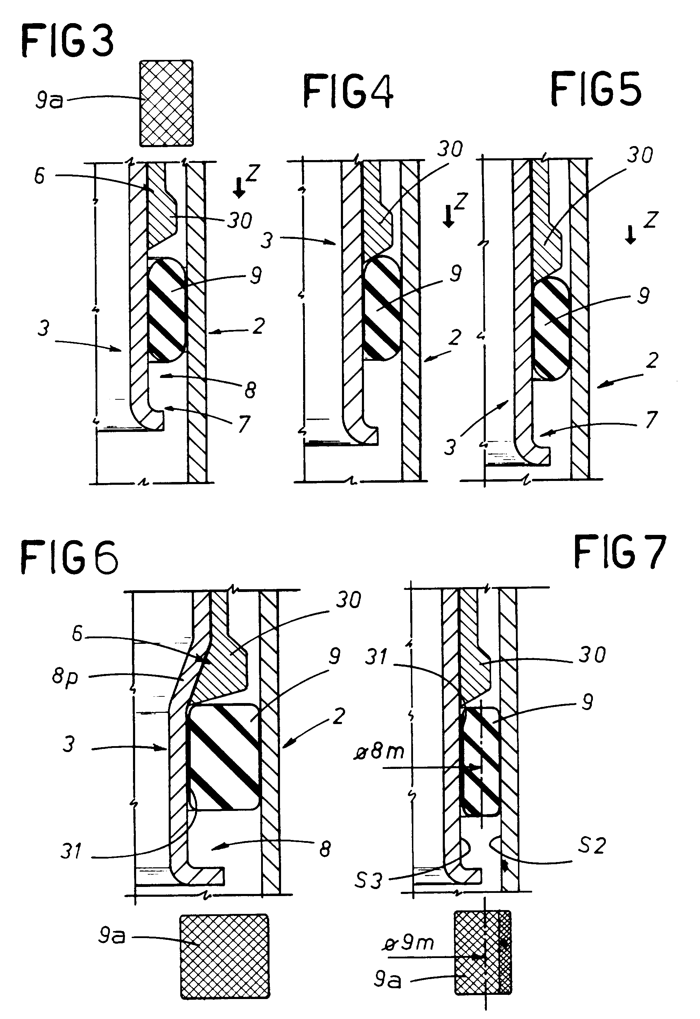

As indicated in figs 3 to 7, the annular projection denoted 6 consists in an annular boss 30 issuing from the peripheral surface of the piston 3, shaped and proportioned such that the extremity of the projection is recognizable as a restraining lip. Further to the aforementioned facility of varying the degree of response in the dissipation of energy by modifying the construction of certain parts of the damper, fig 6 shows an embodiment in which the peripheral part of the piston 3 occupied by the seating 8 exhibits an angled portion 8p, coinciding with the annular projection denoted 6; this creates a spoon-like profile in which to seat the annular friction element 9, and as a result, increases the difference dφ between diameters referred to above. In like manner, fig 7 shows an embodiment in which the annular dimension of the friction element 9 is dissimilar to the virtual annular dimension of the seating 8, such that the mean diameter φ9m of the friction element 9 differs from the corresponding mean diameter φ8m of the seating 8; thus, with the damper in operation and the friction element 9 compressed in the seating 8, a varying response is achieved in the dissipation of kinetic energy as the piston 3 and cylinder 2 are invested with axial motion relative one to the other. In this instance, the difference in response consists in a greater friction on the internal surface S2 of the cylinder 2 than on an external surface S3 of the piston 3 (these two variations in response are illustrated in the graph of fig 2, where the first is shown in broken line, and the second in dot-dash).

A further variation in response is obtainable by interposing a membrane 31 of compact dimensions, fashioned in material having a low coefficient of friction, between the external surface S3 of the piston 3 and the corresponding internal surface 9a of the annular friction element 9, in such a way as to reduce the effect of friction generated between the two; such a membrane 31 might consist in a film of paint applied to either of the two surfaces 9a or S3 in question, or alternatively, an ultra-thin layer of material fixed to one of the surfaces 9a or S3 by means of an adhesive.

In fig 2, which illustrates the spin stage of a machine wash cycle, the "x" axis represents the axial travel of the piston 3 within the cylinder 2, in millimetres, whilst the "y" axis represents the force of opposition to these same axial movements of the piston within the cylinder, in kilograms, resulting from the friction generated between the annular element 9 and the respective internal and external surfaces of the cylinder 2 and piston 3. Observing fig 2, in conjunction with figs 1, 3, 4 and 5, it will be seen how at the instant in which the piston 3 is driven by the drum toward the far wall 27 (arrow Z), the annular friction element 9 is positioned against the projection denoted 7 and the force "F" opposing the movement of the piston 3 into the cylinder 3 increases, rapidly at first, from zero (the position reflected in fig 3) to a value "A" which corresponds to the reaction force deriving from the friction generated in opposition to the sliding movement of the piston 3 within the annular friction element 9. The moment that the reaction force "F" reaches value "A", the piston 3 begins stroking at a substantially constant value of "F" internally of and in relation to the annular friction element 9, which remains substantially in the same position with respect to the cylinder 2 by reason of the greater degree of friction generated between the larger diameter surfaces of these same two elements. As the remaining projection 6 enters into contact with the annular friction element 9 (the position shown in fig 4), the element 9 is driven forward, thus sliding against the internal surface of the cylinder 2. The initiation of this sliding movement is accompanied by a sharp increase in the reaction force "F" to the value denoted "B", whereupon the force stabilizes during the entire subsequent duration of the sliding contact between the annular friction element 9 and the internal surface of the cylinder 2 (the position shown in fig 5).

As the piston 3 begins to stroke 2 in the opposite direction to that considered thus far, the factors already expounded above (which require no further repetition) will occasion an initial variation in the reaction force "F", which assumes value "-A" and thereupon stabilizes for a given period before undergoing a further sharp variation to the value denoted "-B", followed by a further stabilization, and finally a return to value zero, which occurs when the piston 3 reaches its position of maximum separation from the wall 27 of the frame.

From the foregoing, it will be seen that setting the annular projections 6 and 7 apart the one from the other by a distance greater than the axial dimension of the annular friction element 9 has a distinct effect, namely: each time the piston 3 is caused by the drum to penetrate further into the cylinder 2, or during the corresponding inverse movement, there will be an initial sliding movement of the piston 3 within the cylinder 2, occurring in conditions of relatively low friction, followed by a continuation of this same movement during which friction increases. During the initial stage of the spin effected by a typical washing machine (when the degree of relative motion between piston and cylinder is appreciable), the part of the stroke 3 that occurs at low friction brings no disadvantage, whereas the vibration-damping function proper is performed principally during the part of the stroke which occurs in conditions of higher friction, as appropriate; once beyond the transient state of the spin, which is characterized by strong vibrations, and with the oscillations of the drum significantly reduced, the damper 1 begins absorbing shock at a lower level of kinetic energy in accordance with the stated objects, without the reaction force "F" exceeding the value denoted "A", that is, with the piston 3 simply stroking against the inner wall of the annular friction element 9 and with no sliding contact produced between the annular element 9 and the cylinder 2. Thus, the damping effect is less pronounced and the suspension contributes (through a reduced reaction force) to a lower overall level of vibration.

No limitation is implied in the present disclosure; for example, the diameter of the piston 3 might be varied at the design stage to the end of varying the damping force during the initial stage of the spin, i.e. the value denoted "A" in fig 2, to suit different requirements of use.

## Claims

1. A damper (1), in particular as utilized in washing machines for absorbing the oscillations generated between two structures capable of relative motion such as a drum and a frame, of the type comprising a cylinder (2) and a piston (3), means (9) operating between the cylinder and piston of which the function is to dissipate the kinetic energy deriving from relative axial movements, means (23) associated with the free end of the cylinder and the free end of the piston, by which the damper is anchored to respective walls (27) afforded by the two structures capable of relative motion, and at least two annular projections (6, 7) associated with a peripheral portion of the piston (3), of which the function is to create a seating (8) for an annular friction element (9) provided with an inner (9a) and an outer cylindrical surface, this last being offered in direct contact to the inside wall of the cylinder (2); said friction element constituting the energy dissipation means (9), characterized in that
said annular friction element is positioned in direct contact with the outer surface of the piston 3 by means its inner cylindrical surface and the seating (8) compassed by the two annular projections (6, 7) exhibits an axial dimension (D1) greater than the corresponding axial dimension (D2) of the annular friction element (9), in such a way as to achieve a variable response in the dissipation of kinetic energy which is dependent upon the difference (dφ) between the external diameter (φe) of the piston and the internal diameter (φi) of the cylinder, and on the length of the axial stroke effected by the piston and cylinder one in relation to another.

2. A damper as in claim 1, wherein at least one of the annular projections (6) associated with the piston (3) consists in an annular boss (30) issuing from the peripheral surface.

3. A damper as in claim 1, wherein the part of the peripheral portion of the piston (3) occupied by the seating (8) exhibits an angled portion (8p), positioned to coincide with one of the annular projections (6), such that the seating (8) assumes a profile of substantially spoonlike geometry in which to accommodate a relative annular friction element (9), and the value of the difference (dφ) between diameters is thus increased.

4. A damper as in claim 1, comprising an annular friction element (9) of which the mean diameter (φ9m) is greater than the corresponding mean diameter (φ8m) of the seating (8), such that the friction element (9) is compressed internally of the seating (8) and a variable response is achieved in the dissipation of kinetic energy during relative axial movement of the piston and cylinder.

5. A damper as in claim 1, comprising an annular friction element (9) of which the mean diameter (φ9m) is greater than the corresponding mean diameter (φ8m) of the seating (8), such that the friction generated through contact with the internal surface (S2) of the cylinder is greater than the friction generated through contact with the external surface (S3) of the piston.

6. A damper as in claim 1 or 2 or 3 or 4, further comprising a membrane (31) fashioned in a material having a low coefficient of friction, interposed between the external surface (S3) of the piston and the corresponding internal surface (9a) of the annular friction element (9), of which the function is to reduce the relative friction between the two surfaces.

7. A damper as in claim 6, wherein the low friction membrane consists in a film of paint applied to one of the two surfaces (9a, S3).

8. A damper as in claim 6, wherein the low friction membrane consists in an ultrathin layer of material affixed to one of the two surfaces (9a, S3) with adhesives.

## Patentansprüche

1. Dämpfer (1), insbesondere wie er für Waschmaschinen zum Auffangen der Schwingungen verwendet wird, die zwischen zwei Strukturen erzeugt werden, die in der Lage sind, sich jeweils zu bewegen, wie zum Beispiel eine Trommel und ein Rahmen, vom Typ enthaltend einen Zylinder (2) und einen Kolben (3); Mittel (9), die zwischen dem Zylinder und dem Kolben wirken, und deren Aufgabe es ist, die von den entsprechenden axialen Bewegungen herkommenden kinetischen Kräfte zu zerstreuen; Mittel (23), die dem freien Ende des Zylinders und dem freien Ende des Kolbens zugeordnet sind, und durch die der Dämpfer an den entsprechenden Wänden (27), aufgewiesen von den beiden Strukturen mit einer jeweiligen Bewegung, verankert sind; sowie wenigstens zwei ringförmige Vorsprünge (6, 7), verbunden mit einem umlaufenden Abschnitt des Kolbens (3), deren Aufgabe es ist, einen Sitz (8) für ein ringförmiges Kupplungselement (9) zu bilden, versehen mit einer inneren (9a) und einer äusseren Oberfläche, wobei letztere sich in direktem Kontakt mit der inneren Wand des Zylinders (2) befindet, und wobei das genannte Kupplungselement das Energiezerstreuungsmittel (9) bildet;
**dadurch gekennzeichnet**, dass das genannte ringförmige Kupplungselement mittels seiner internen zylindrischen Oberfläche in direktem Kontakt mit der äusseren Oberfläche des Kolbens (3) angeordnet ist und der von den beiden ringförmigen Vorsprüngen (6, 7) umgebene Sitz (8) eine grössere axiale Abmessung (D1) aufweist als die entsprechende axiale Abmessung (D2) des ringförmigen Kupplungselementes (9), und zwar so, dass ein veränderbares Ansprechen bei der Zerstreuung der kinetischen Energie erhalten wird, welche von der Differenz (d⌀) zwischen dem äusseren Durchmesser (⌀e) des Kolbens und dem inneren Durchmesser (⌀i) des Zylinders abhängt sowie von der Länge des axialen Hubs, der von dem Kolben und dem Zylinder im Verhältnis zueinander ausgeführt wird.

2. Dämpfer nach Patentanspruch 1, bei welchem wenigstens einer der dem Kolben (3) zugeordneten ringörmigen Vorsprünge (6) aus einem ringförmigen Anguss (30) besteht, der sich von der umlaufenden Oberfläche aus erstreckt.

3. Dämpfer nach Patentanspruch 1, bei welchem der Teil des umlaufenden Abschnittes des Kolbens (3), der von dem Sitz (8) belegt ist, einen angewinkelten Abschnitt (8p) aufweist, so positioniert, dass er mit einem der ringförmigen Vorsprünge (6) übereinstimmt, so dass der Sitz (8) ein Profil von einer im wesentlichen löffelartigen Geometrie annimmt, in welcher ein entsprechendes ringförmiges Kupplungselement (9) aufgenommern wird, und der Wert der Differenz (d⌀) zwischen den Durchmessern sich somit erhöht.

4. Dämpfer nach Patentanspruch 1, enthaltend ein ringförmiges Kupplungselement (9), dessen durchschnittlicher Durchmesser (⌀9m) grösser ist als der entsprechende durchschnittliche Durchmesser (⌀8m) des Sitzes (8), so dass das Kupplungselement (9) im Inneren des Sitzes (8) zusammengedrückt ist und während der entsprechenden axialen Bewegung des Kolbens und des Zylinders ein variables Ansprechen in der Zerstreuung der kinetischen Energie erhalten wird.

5. Dämpfer nach Patentanspruch 1, enthaltend ein ringförmiges Kupplungselement (9), dessen durchschnittlicher Durchmesser (⌀9m) grösser ist als der entsprechende durchschnittliche Durchmesser (⌀8m) des Sitzes (8), so dass die Reibung, die durch den Kontakt mit der inneren Oberfläche (S2) des Zylinders erzeugt wird, stärker ist als die durch den Kontakt mit der äusseren Oberfläche (S3) des Kolbens erzeugte Reibung.

6. Dämpfer nach Patentanspruch 1 oder 2 oder 3 oder 4, weiter enthaltend eine Membrane (31), hergestellt aus einem Material, das einen niedrigen Reibungskoeffizienten hat, und eingesetzt zwischen der äusseren Oberfläche (S3) des Kolbens und der entsprechenden inneren Oberfläche (9a) des ringförmigen Kupplungselementes (9), deren Aufgabe es ist, die entsprechende Reibung zwischen den beiden Oberflächen zu verringern.

7. Dämpfer nach Patentanspruch 6, bei welchem die Membrane mit niedriger Reibung aus einem Anstrichfilm besteht, der auf einer der beiden Oberflächen (9a, S3) aufgetragen ist.

8. Dämpfer nach Patentanspruch 6, bei welchem die Membrane mit niedriger Reibung aus einer extradünnen Schicht aus Material besteht, die mit Klebematerial auf einer der beiden Oberflächen (9a, S3) aufgetragen ist.

## Revendications

1. Un amortisseur (1), utilisé en particulier dans les machines à laver pour absorber les oscillations générées entre deux corps pouvant effectuer un mouvement réciproque, tel le tambour et la charpente, du type comprenant un cylindre (2) et un piston (3), des éléments (9) opérant entre le cylindre et le piston dont la fonction est de dissiper l'énergie cinétique dérivant des mouvements axiaux relatifs, des parties (23) associées à l'extrémité libre du cylindre et à l'extrémité libre du piston, par lesquels l'amortisseur est attaché aux parois (27) composées des dits deux corps mobiles réciproquement et au moins deux saillies annulaires (6, 7) associées à une portion périphérique du piston (3), définissant une assiette (8) pour un élément annulaire de friction (9) possédant une surface cylindrique interne (9a) et externe, cette dernière étant en contact direct avec la paroi interne du cylindre (2); le dit élément de friction, constituant l'élément de dissipation d'énergie (9), caractérisé par le fait que
le dit élément annulaire de friction est situé en contact direct avec les surfaces externes du piston (3) au moyen de sa surface interne et l'assiette (8) entourée par les deux saillies annulaires (6, 7) présente une dimension axiale (D1) supérieure à la dimension axiale (D2) correspondante de l'élément annulaire de friction (9) de manière à produire un effet variable quant à la dissipation d'énergie cinétique qui dépend de la différence (d⌀) entre le diamètre externe (⌀e) du piston et le diamètre interne (⌀i) du cylindre, et de la longueur de la course axiale effectuée par le piston et le cylindre, l'un par rapport à l'autre.

2. Un amortisseur comme dans la revendication 1, dans lequel au moins l'une des deux saillies annulaires (6) associées au piston (3) consiste en un bossage annulaire (30) sortant de la surface périphérique.

3. Un amortisseur comme dans la revendication 1, dans lequel la partie de la portion périphérique du piston (3) occupée par l'assiette (8) présente une portion en angle (8p) positionnée de manière à coïncider avec l'une des deux saillies de telle sorte que l'assiette (8) assume un profil substantiellement en forme de cuiller à soupe pouvant loger un élément annulaire de friction (9) correspondant, permettant ainsi une augmentation de la valeur de la différence (d⌀) entre les diamètre.

4. Un amortisseur comme dans la revendication 1, comprenant un élément annulaire de friction (9) dont le diamètre (⌀9) est supérieur au diamètre (⌀8) correspondant de l'assiette (8), de telle sorte que l'élément de friction (9) soit comprimé à l'intérieur de l'assiette (8) et que la dissipation d'énergie cinétique puisse varier en fonction du mouvement axial réciproque des pistons et du cylindre.

5. Un amortisseur comme dans la revendication 1, comprenant un élément annulaire de friction (9) dont le diamètre moyen (⌀9) est supérieur au diamètre moyen (⌀8) correspondant de l'assiette (8), de telle sorte que la friction générée par le contact avec la surface interne (S2) du cylindre soit supérieure à la friction générée par le contact avec la surface externe (S3) du piston.

6. Un amortisseur comme dans la revendication 1 ou 2 ou 3 ou 4, comprenant en plus une membrane (31) confectionnée dans un matériau possédant un faible coefficient de friction, situé entre l'élément de friction externe (S3) du piston et la surface interne correspondante (9a) de l'élément annulaire de friction (9), dont la fonction est de réduire la friction réciproque entre les deux surfaces.

7. Un amortisseur comme dans la revendication 6, dans lequel la membrane à faible friction consiste en une pellicule de peinture appliquée sur l'une des deux surfaces (9a, S3)

8. Un amortisseur comme dans la revendication 6, dans lequel la membrane à faible friction consiste en une couche ultra-fine de matériau, fixé sur l'une des deux surfaces (9a, S3) à l'aide d'adhésifs.
